Europäisches Patentamt

European Patent Office

Office européen des brevets

(11) Veröffentlichungsnummer: **0 028 285**
**B1**

# (12) EUROPÄISCHE PATENTSCHRIFT

(45) Veröffentlichungstag der Patentschrift:
25.05.83

(21) Anmeldenummer: 80103797.9

(22) Anmeldetag: 16.07.80

(51) Int. Cl.³: **B 23 D 61/02,** B 27 B 5/32

(54) Befestigungsvorrichtung für ein Kreissägeblatt auf einem Antriebszapfen.

(30) Priorität: 12.10.79 DE 2941358

(43) Veröffentlichungstag der Anmeldung:
13.05.81 Patentblatt 81/19

(45) Bekanntmachung des Hinweises auf die Patenterteilung·
25.05.83 Patentblatt 83/21

(84) Benannte Vertragsstaaten:
CH DE FR GB LI NL

(56) Entgegenhaltungen:
**DE-B-1 728 345
DE-C-959 323
FR-A-946 884
FR-A-966 234
GB-A-624 328
GB-A-637 521
US-A-2 649 868**

(73) Patentinhaber: ROBERT BOSCH GMBH, Postfach 50,
D-7000 Stuttgart 1 (DE)

(72) Erfinder: Schädlich, Fritz, Panoramastrasse 4,
D-7022 Leinfelden-Echterdingen (DE)

## Befestigungsvorrichtung für ein Kreissägeblatt auf einem Antriebszapfen

### Stand der Technik

Die Erfindung geht aus von einer Befestigungsvorrichtung nach der Gattung des Hauptanspruchs. Bei den bekannten Befestigungsvorrichtungen dieser Art, bei denen der Reibungsschluß zwischen den Spannelementen und dem Sägeblatt als Rutschkupplung zur Überlastsicherung dient, ist in der Regel am Sägeblatt ein Symbol in Form eines Drehrichtungspfeiles angebracht, welches einen seitenverkehrten Einbau des Sägeblattes verhindern soll. Trotz dieses Hinweises auf dem Sägeblatt kommt es immer wieder vor, daß das Sägeblatt falsch eingebaut wird, weil keine konstruktiven Mittel vorgesehen sind, die einen seitenverkehrten Einbau des Sägeblattes auch tatsächlich verhindern. Bei Befestigungsvorrichtungen mit formschlüssiger Kupplung von Sägeblatt und Antriebszapfen ist es zwar schon bekannt, die Kupplungsmittel derart unsymmetrisch anzuordnen, daß das Sägeblatt nur in der richtigen Lage eingebaut werden kann (DE-U-1 878 647). Diese Lösung ist jedoch bei Befestigungsvorrichtungen mit einer Rutschkupplung zwischen Sägeblatt und Antriebszapfen nicht anwendbar, weil dort eine formschlüssige Verbindung zwischen dem Sägeblatt und dem Antriebszapfen nicht vorhanden sein darf.

### Vorteile der Erfindung

Die erfindungsgemäße Anordnung mit den kennzeichnenden Merkmalen des Hauptanspruchs hat den Vorteil, daß ein falsches Aufspannen des Sägeblattes mit einfachen konstruktiven Mitteln vermieden ist, welche den Reibungsschluß und damit die ordnungsgemäße Funktion der durch den Reibungsschluß gebildeten Rutschkupplung zwischen Sägeblatt und Antriebszapfen nicht beeinflussen.

Durch die in den Unteransprüchen aufgeführten Maßnahmen sind vorteilhafte Ausgestaltungen und Weiterbildungen der im Hauptanspruch angegebenen Anordnung möglich.

Eine ohne zusätzliche Teile auskommende Anordnung ergibt sich, wenn das Sägeblatt mit mindestens einem axialen Vorsprung versehen ist, welcher in eine ringnutartige Vertiefung des einen Spannelements bzw. über dessen Mantelumfang greift und welcher bei falsch aufgestecktem Sägeblatt die Teile soweit axial auseinander hält, daß das der Schraube zugekehrte Spannelement nicht mehr auf den Antriebszapfen aufschiebbar ist bzw. die Schraube nicht mehr in die Gewindebohrung im Stirnende des Antriebszapfens greift.

Der axiale Vorsprung am Sägeblatt kann durch einen Kragen an der Aufstecköffnung des Sägeblattes gebildet sein, welcher in einen erweiterten Bohrungsabschnitt in einem der Spannelemente eingreift.

Bei einer bevorzugten Ausführungsform ist der axiale Vorsprung durch mindestens eine Zunge gebildet, die über den Umfang des einen Spannelements greift, wobei das andere Spannelement ein kreisringförmiges Querschnittsprofil hat, dessen Außenradius größer ist als der Abstand der Zunge zur Achse des Antriebszapfens.

In allen Fällen kann mit den vorhandenen Spannelementen auch ein normales Sägeblatt auf den Antriebszapfen festgespannt werden, so daß die Befestigungsvorrichtung universell einsetzbar ist.

Wenn das Sägeblatt keine Axialvorsprünge, sondern nur gestanzte Löcher haben soll, dann kann vorteilhaft der dem Sägeblatt zugeordnete axiale Vorsprung bzw. eine Vertiefung an einem Ring gebildet sein, der zwischen den beiden Spannelementen auf dem Antriebszapfen ohne Formschluß in Drehrichtung geführt und mit dem Sägeblatt über Kupplungselemente drehfest verbunden ist, welche gleichzeitig eine seitenverkehrte Zuordnung des Sägeblattes zu dem Ring verhindern.

Der Ring kann vorteilhaft das Sägeblatt tragen, wobei die Kupplungselemente zweckmäßig durch eine von der Kreisform abweichende, gegenüber jeder beliebigen durch die Drehachse gehenden Radialebene unsymmetrischen Formgebung der Bohrung im Sägeblatt und des das Sägeblatt tragenden Umfangsabschnittes des Ringes gebildet sein können, so daß sich zusätzlich anzubringende Kupplungsstifte oder dgl. erübrigen.

Um auch noch zu vermeiden, daß das Sägeblatt samt den beiden Spannelementen falsch herum auf den Antriebszapfen aufgesteckt und dort festgespannt werden kann, wird weiter vorgeschlagen, daß das eine Spannelement einen die feste Schulter des Antriebszapfens axial übergreifenden Kragen hat, dessen Innendurchmesser kleiner als der Außendurchmesser einer unter dem Kopf der Schraube liegenden Druckscheibe ist, und daß die axiale Länge des Kragens so bemessen ist, daß bei falschem Aufstecken des Sägeblatts samt den beiden Spannelementen die Schraube nicht mehr in die Gewindebohrung im Stirnende des Antriebszapfens greift.

Eine andere Möglichkeit, das falsche Aufstecken des Sägeblatts samt den beiden Spannelementen zu vermeiden, besteht darin, den Sitz des Antriebszapfens für das an dessen Schulter anliegende Spannelement so auszubilden, daß das andere Spannelement auf diesen Sitz nicht aufschiebbar ist.

Das zwischen der Schulter des Antriebszapfens und dem Sägeblatt angeordnete Spannelement kann auch noch weitere Funktionen haben, z. B. mit seiner vom Sägeblatt abgekehrten Stirnfläche als Anschlag für ein Kugellager dienen. Wenn dieses Spannelement am Antriebszapfen irgendwie festgehalten ist und sich beim Auswechseln des Sägeblattes nicht ohne weiteres vom Antriebszapfen löst, kann auf die zusätzliche Sicherung gegen falsches Aufsetzen des Sägeblattes samt den beiden Spannelementen verzichtet und nur dafür Sorge getragen werden, daß das Sägeblatt für sich allein nicht falsch aufgesteckt werden kann.

### Zeichnung

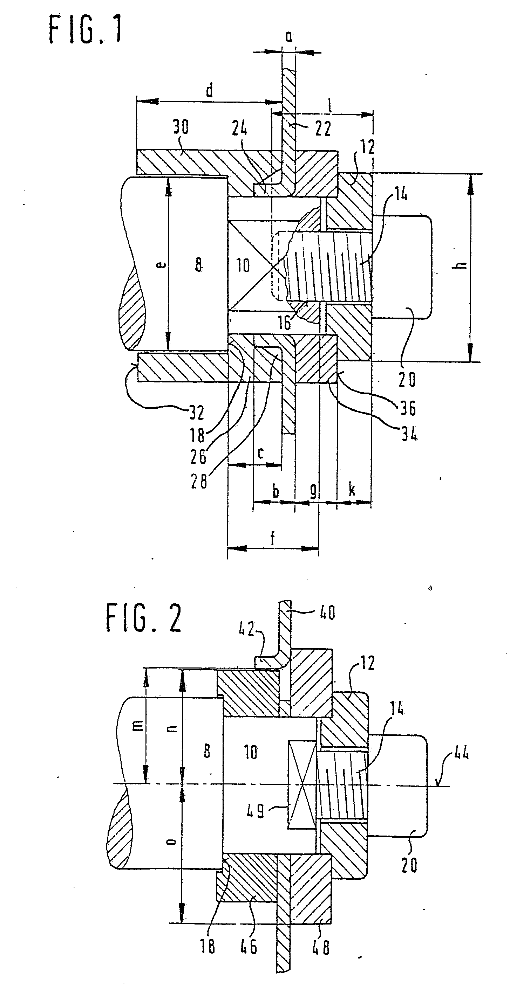

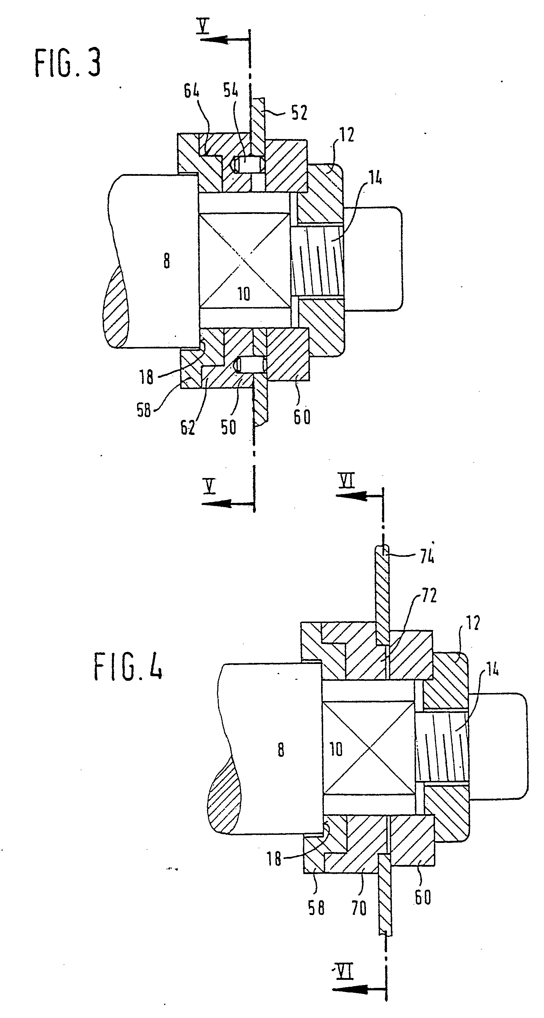

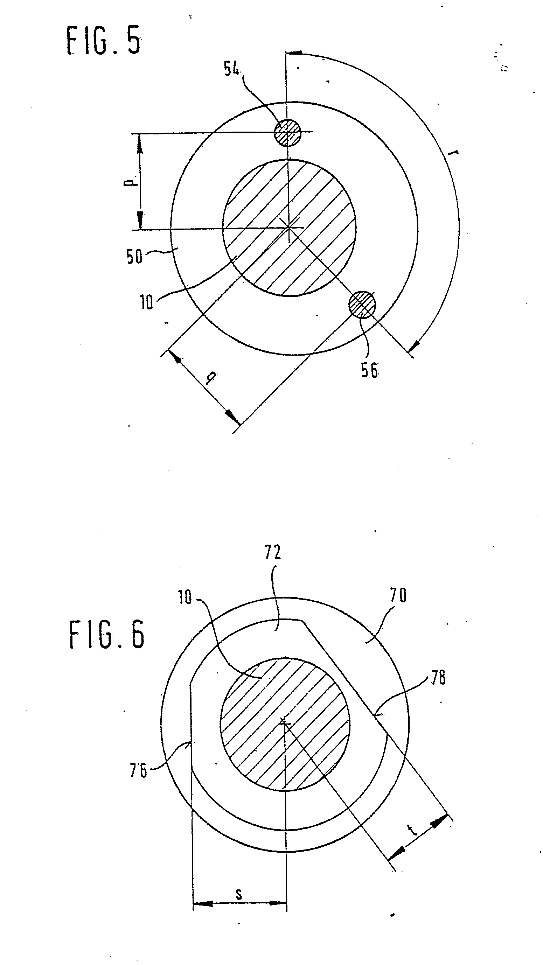

Vier Ausführungsbeispiele der Erfindung sind in der Zeichnung dargestellt und in der nachfolgenden Beschreibung näher erläutert. Es zeigen die Fig. 1 bis 4 die vier Ausführungsbeispiele jeweils vergrößert und im Schnitt. Die Fig. 5 zeigt einen Schnitt nach der Linie V-V in Fig. 3 und in Fig. 6 ist ein Schnitt nach der Linie VI-VI in Fig. 4 dargestellt.

### Beschreibung der Ausführungsbeispiele

In allen vier Ausführungsbeispielen ist eine Antriebswelle 8 mit einem im Durchmesser kleineren Zapfen 10 versehen, auf welchen ein Sägeblatt mit Hilfe einer Druckscheibe 12 und einer Schraube 14 aufgespannt ist, welche in eine Gewindebohrung 16 im Stirnende des Zapfens 10 eingeschraubt ist. Zwischen dem Zapfen 10 und der Antriebswelle 8 ist eine Ringschulter 18 gebildet, gegen welche die Schraube 14 das Sägeblatt und zwei zu dessen beiden Seiten angeordnete, nachstehend noch näher beschriebene Spannelemente drückt, wobei sich die Druckscheibe 12 am Kopf 20 der Schraube 14 abstützt.

Beim Ausführungsbeispiel nach Fig. 1 ist ein Sägeblatt 22 von der Wandstärke a mit einem axialen Kragen 24 an der kreisrunden Aufstecköffnung versehen, dessen Stirnrand von der abgekehrten Stirnseite des Sägeblattes um das Maß b entfernt ist. Zwischen dem Sägeblatt 22 und der Schulter 18 am Beginn des Zapfens 10 ist ein Spannring 26 angeordnet, der einen erweiterten Bohrungsabschnitt 28 zur Aufnahme des Kragens 24 am Sägeblatt 22 hat und dessen im Bereich des Zapfens 10 gemessene axiale Länge mit c bezeichnet ist. Der Spannring 26 hat an der einen Seite einen ringförmigen Kragen 30, der die Antriebswelle 8 mit geringem Spiel übergreift, dessen freie Stirnfläche 32 um das Maß d von der anderen, am Sägeblatt 22 anliegenden Stirnfläche des Spannrings 26 entfernt ist und dessen mit e bezeichneter Innendurchmesser etwas größer als der Außendurchmesser der Antriebswelle 8 ist. Der Zapfen 10 hat über seine gesamte Länge f ein angefastes Rundprofil, welchem die Bohrung im Spannring 26 angepaßt ist, so daß dieser drehfest mit dem Zapfen 10 verbunden ist.

Auf der anderen Stirnseite des Sägeblattes 22 liegt ein zweiter Spannring 34 an, dessen axiale Länge mit g bezeichnet ist, der ebenfalls drehfest mit dem Zapfen 10 gekoppelt ist und der ein stückweit über dessen frei Stirnfläche vorsteht. An der vom Sägeblatt abgekehrten Spannfläche 36 des Spannrings 34 liegt die Druckscheibe 12 an, deren Außendurchmesser h etwas größer als der Innendurchmesser e des Spannrings 26 ist und deren am Spannring 34 und am Kopf 20 der Schraube 14 anliegende Spannflächen um das Maß k zueinander axial versetzt sind. Die Länge des Gewindeschaftes der Schraube 14 ist mit 1 bezeichnet. Das aufgespannte Sägeblatt 22 ist zwischen den beiden unverdrehbar auf dem Zapfen 10 sitzenden Spannringen 26 und 34 reibungsschlüssig festgehalten und kann sich gegenüber dem Zapfen 10 drehen, wenn das Arbeitsmoment einen vorgegebenen, durch ein kontrolliertes Anzugsmoment der Schraube 14 bestimmten Wert übersteigt.

In der richtigen Lage des Sägeblattes 22 ist dessen Kragen 24 gegen die Schulter 18 des Zapfens 10 gerichtet und vom erweiterten Bohrungsabschnitt 28 des Spannrings 26 aufgenommen. Wenn der Spannring 26 richtig, das Sägeblatt 22 jedoch falsch aufgesetzt wird, ergibt sich zwischen der Schulter 18 und der Stirnfläche des Kragens 24 ein Abstand von $b+c$, welcher gleichgroß oder etwas größer als die Länge f des Zapfens 10 ist. In diesem Fall kann der Spannring 34 nicht mehr auf den Zapfen 10 aufgesteckt werden, so daß die falsche Lage des Sägeblattes bemerkbar wird. Wenn in diesem Fall unter Weglassung des Spannrings 34 die Schraube 14 angezogen wird, kann das falsch aufgesetzte Sägeblatt 22 nicht festgespannt werden, weil die Druckscheibe 12 zuvor zur Anlage an der Stirnfläche des Zapfens 10 kommt und ihre zurückgesetzte Spannfläche noch einen definierten Abstand zur Stirnfläche des Kragens 24 am Sägeblatt hat.

Wenn sowohl der Spannring 26 als auch das Sägeblatt 22 falsch aufgesteckt werden, kommt die Stirnfläche 32 des Spannrings 26 um den Betrag $a+d-f$ vor die Stirnfläche des Zapfens 10 zu liegen. Der Spannring 34 kann in diesem Fall ebenfalls nicht mehr auf den Zapfen 10 aufgesteckt werden. Wenn trotzdem der Versuch unternommen wird, das Sägeblatt ohne den Spannring 34 festzuspannen, stützt sich die Druckscheibe 12 wegen ihres größeren Außendurchmessers h an der Stirnfläche 32 des Spannrings 26 ab, so daß sich zwischen dem Kopf 20 der Schraube 14 und der Stirnfläche des Zapfens 10 ein Abstand von der Länge $a+d-f+k$ ergibt, der gleich oder größer als die Länge I des Gewindezapfens der Schraube 14 ist, so daß sich diese nicht mehr in das Innengewinde des Zapfens 10 eindrehen läßt.

Wenn in einem anderen Fall der Spannring 26 irrtümlich fortgelassen und das Sägeblatt 22 in der falschen Lage auf dem Zapfen 10 aufgesetzt wird, steht die Spannfläche 36 des Spannringes 34 um das Maß $f-b-g$ von der Stirnfläche des Zapfens 10 zurück, so daß beim Anziehen der Schraube 14 die Druckscheibe 12 an der Stirnfläche des Zapfens 10 zur Anlage kommt und das Sägeblatt nicht festgespannt werden kann, was sich wiederum sofort bemerkbar macht.

Beim Ausführungsbeispiel nach Fig. 2 hat ein Sägeblatt 40 eine oder mehrere axial vorstehende Zungen 42, die einen Abstand m von der Drehachse 44 der Antriebswelle 8 hat. Zwischen dem Sägeblatt 40 und der Schulter 18 am Beginn des Zapfens 10 ist ein Spannring 46 angeordnet, dessen Außenradius n etwas kleiner als der Abstand m der Zunge 42 von der Drehachse 44 ist. Auf der anderen Seite des Sägeblattes 40 sitzt ein zweiter Spannring 48 auf dem Zapfen 10, dessen Außenradius o größer als der Abstand m ist. Im Bereich der Sitzfläche für den Spannring 48 hat der Zapfen 10 eine angefaste Fläche 49 und die Bohrung des Spannrings 48 ist diesem von der Kreisform abweichenden Querschnittsprofil des Zapfens 10 angepaßt. Der Spannring 46 hat eine kreisrunde Bohrung und läßt sich ungehindert bis zum Anschlagen an der Schulter 18 auf den Zapfen 10 aufschieben.

Wenn bei richtigsitzendem Spannring 46 das Sägeblatt 40 falsch aufgesteckt wird, verhindert die Zunge 42 am Sägeblatt 40, daß der Spannring 48 auf dem Zapfen 10 aufgesteckt werden kann. Ein falsches Aufstecken des Sägeblattes 40 samt den beiden Spannringen 46 und 48 ist nicht möglich, weil der Spannring 48 sich nur so weit auf den Zapfen 10 aufschieben läßt, wie die angefaste Fläche 49 reicht. Die dritte Fehlermöglichkeit, den Spannring 46 wegzulassen und das Sägeblatt 40 falsch aufzustecken, würde ebenfalls sofort bemerkt, weil sich in diesem Fall das Sägeblatt wiederum nicht festspannen ließe.

Bei den vorbeschriebenen Ausführungsbeispielen sind die axialen Vorsprünge der Sägeblätter, nämlich der Kragen 24 und die Zunge 42, durch Wandabschnitte der Sägeblätter selbst gebildet. Bei den folgenden Ausführungsbeispielen nach den Fig. 3 und 4 sind diese axialen Vorsprünge je an einem zusätzlichen, mit dem Sägeblatt drehfest verbundenen Ring gebildet, so daß das Sägeblatt für den beabsichtigten Zweck nur mit Löchern zu versehen ist, was durch Stanzen geschehen kann.

Bei der Ausführung nach Fig. 3 ist ein zusätzlicher Ring 50 vorgesehen, der mit einem Sägeblatt 52 über zwei Stifte 54 und 56 (Fig. 5) drehfest verbunden ist. Die Stifte 54 und 56 haben unterschiedliche Abstände p und q zur Drehachse der Antriebswelle 8 und sind außerdem in einem Winkel r zueinander versetzt, der jeden beliebigen, von 180 Grad abweichenden Wert haben kann. Wegen der unterschiedlichen Abstände p und q zur Drehachse und der von 180 Grad abweichenden Winkelversetzung r der beiden Stifte 54 und 56 kann das Sägeblatt 52 nur seitenrichtig an den Ring 50 angesteckt werden.

Der Ring 50 und das Sägeblatt 52 sind zwischen zwei Spannringen 58 und 60 reibungsschlüssig festgespannt, welche selbst unverdrehbar auf dem angefasten Zapfen 10 sitzen. Der Ring 50 hat einen axialen Kragen 62, welcher über einen im Durchmesser entsprechend abgesetzten Umfangsabschnitt 64 des Spannrings 58 greift. Der Kragen 62 übt die gleiche Funktion wie der Kragen 24 nach Fig. 1 aus. Seine axiale Länge ist so bemessen, daß der Spannring 60 nicht mehr auf den Zapfen 10 aufgesteckt werden kann, wenn das Sägeblatt 52 samt dem Ring 50 falsch auf dem Zapfen 10 sitzt. Eine Sicherung gegen falsches Aufsetzen des Sägeblattes 52 samt allen Ringen 50, 58 und 60 ist beim Ausführungsbeispiel nach Fig. 3 dadurch vorgesehen, daß dann die Druckscheibe 12 an die vordere Stirnfläche des Spannringes 58 drückt und nicht wie die Schulter 18 an dessen zurückgesetzte Stirnfläche. Der Abstand zwischen den äußeren Stirnflächen der Ringe 58 und 60 ist dann gleichfalls so groß, daß die Schraube 14 mit ihrem Gewinde nicht mehr im Innengewinde des Zapfens 10 fassen kann.

Die Ausführung nach Fig. 4 unterscheidet sich von der nach Fig. 3 dadurch, daß zwischen den beiden Spannringen 58 und 60 ein Tragring 70 angeordnet ist, welcher mit einem angeformten Bund 72 versehen ist, auf welchem ein Sägeblatt 74 unverdrehbar gelagert ist. Zu diesem Zweck ist der Bund 72 mit zwei angefasten Flächen 76 und 78 versehen, welche unterschiedliche Abstände s und t von der Drehachse haben und auch nicht parallel zueinander angeordnet sind. Der Tragring 70 selbst ist wie auch der Ring 50 in Fig. 3 ohne drehfeste Verbindung auf den Zapfen 10 gelagert. Durch die unterschiedlichen Abstände s und t sowie die Unparallelität ist sichergestellt, daß die beiden angefasten Flächen 76 und 78 nicht spiegelbildlich zu einer der möglichen, durch die Drehachse gehenden Radialebenen des Zapfens 10 angeordnet sind. Die Bohrung im Sägeblatt 74 ist dem Querschnittsprofil des mit den beiden Flächen 76 und 78 versehenen Bundes 72 des Tragrings 70 angepaßt, wodurch eine drehfeste und seitenrichtige Zuordnung des Sägeblattes 74 zum Tragring 70 erzwingende Verbindung zwischen diesen beiden Teilen sichergestellt ist.

### Patentansprüche

1. Befestigungsvorrichtung für ein Kreissägeblatt (22) auf einem Antriebszapfen (10), mit zwei zu beiden Seiten des Sägeblatts (22) auf dem Antriebszapfen (10) gelagerten und das Sägeblatt (22) reibungsschlüssig zwischen sich festhaltenden ring- bzw. scheibenförmigen Spannelementen (26, 34), von denen sich das eine (26) an einer festen Schulter (18) des Antriebszapfens (10) und das andere (34) unmittelbar bzw. über eine Druckscheibe (12) am Kopf (20) einer Schraube (14) abstützt, welche in eine Gewindebohrung (16) im Stirnende des Antriebszapfens (10) eingeschraubt ist, dadurch gekennzeichnet, daß das Sägeblatt (22) und mindestens eines der beiden Spannelemente (26, 34) konstruktive Mittel (24) aufweist, durch die beim falschen Aufstecken des Sägeblattes (22) auf den Antriebszapfen (10) die dem Kopf (20) der Schraube (14) zugekehrte Stützfläche (36) des anderen Spannelements (34) einen solchen Abstand von der Schulter (18) des Antriebszapfens (10) hat, daß dieses Spannelement (34) nicht mehr auf den Antriebszapfen (10) aufschiebbar ist, bzw. die Schraube (14) nicht mehr in die Gewindebohrung (16) im Stirnende des Antriebszapfens (10) greift.

2. Vorrichtung nach Anspruch 1, dadurch gekennzeichnet, daß das Sägeblatt (22, 40) mit mindestens einem axialen Vorsprung (24, 42) versehen ist, welcher in eine ringnutartige Vertiefung (28) bzw. über den Mantelumfang des einen Spannelements (26 bzw. 46) greift und welche bei falsch aufgestecktem Sägeblatt die Teile so weit axial auseinander hält, daß das der Schraube (14) zugekehrte Spannelement (34, 48) nicht mehr auf den Antriebszapfen (10) aufschiebbar ist bzw. die Schraube (14) nicht mehr in die Gewindebohrung (16) im Stirnende des Antriebszapfens greift.

3. Vorrichtung nach Anspruch 2, dadurch gekennzeichnet, daß das Sägeblatt (22) als axialen Vorsprung einen Kragen (24) an der Aufstecköffnung hat, welcher in einen erweiterten Bohrungsabschnitt (28) in einem der Spannelemente (26 bzw. 34) eingreift.

4. Vorrichtung nach Anspruch 2, dadurch gekennzeichnet, daß das Sägeblatt (40) eine axial abstehende Zunge (42) hat, die über den Umfang des einen Spannelementes (46) greift, und daß das andere Spannelement (48) ein kreisringförmiges Querschnittsprofil hat, dessen Außenradius größer ist als der Abstand (m) der Zunge (42) zur Drehachse des Antriebszapfens (10).

5. Vorrichtung nach Anspruch 2, dadurch gekennzeichnet, daß der dem Sägeblatt zugeordnete axiale Vorsprung bzw. eine Vertiefung an einem Ring (50, 70) gebildet ist, der zwischen den beiden Spannelementen auf dem Antriebszapfen ohne Formschluß in Drehrichtung geführt und mit dem Sägeblatt über Kupplungselemente (54, 56, bzw. 76, 78) drehfest verbunden ist, welche gleichzeitig ein falsches Aufsetzen des Sägeblattes auf den Ring verhindern.

6. Vorrichtung nach Anspruch 5, dadurch gekennzeichnet, daß die Kupplungselemente durch mindestens zwei aus dem Ring (50) axial hervorstehende und in Bohrungen des Sägeblatts eingreifenden Zapfen (54, 56) gebildet sind, die in verschiedenen, durch die Drehachse des Antriebszapfens gehenden Radialebenen liegen und verschiedene Abstände (p, q) zur Drehachse haben.

7. Vorrichtung nach Anspruch 5, dadurch gekennzeichnet, daß das Sägeblatt (74) auf einem axialen Kragen (72) des Ringes (70) sitzt und daß die Kupplungselemente durch eine von der Kreisform abweichende, gegenüber jeder beliebigen durch die Drehachse gehenden Radialebene unsymmetrische Formgebung des Kragenumfangs und der Bohrung im Sägeblatt gebildet sind.

8. Vorrichtung nach einem der vorhergehenden Ansprüche, dadurch gekennzeichnet, daß durch unterschiedliche Formgebung der beiden Spannelemente (26, 34, bzw. 46, 48) ein falsches Aufstecken des Sägeblatts samt den beiden Spannelementen unmöglich gemacht ist.

9. Vorrichtung nach Anspruch 8, dadurch gekennzeichnet, daß das eine Spannelement (26) einen die feste Schulter (18) des Antriebszapfens (10) axial übergreifenden Kragen (30) hat, dessen Innendurchmesser (e) kleiner als der Außendurchmesser (h) einer unter dem Kopf (20) der Schraube (14) liegenden Druckscheibe (12) ist, und dessen axiale Länge so bemessen ist, daß bei falschem Aufstecken des Sägeblattes (22) samt den beiden Spannelementen (26, 34) die Schraube (14) nicht mehr in die Gewindebohrung (16) im Stirnende des Antriebszapfens greift.

10. Vorrichtung nach Anspruch 8, dadurch gekennzeichnet, daß der auf dem Antriebszapfen (10) für das an seiner Schulter (18) anliegende Spannelement (46) gebildete Sitz so geformt ist, daß das andere Spannelement (48) auf diesen Sitz nicht aufschiebbar ist.

11. Vorrichtung nach einem der vorhergehenden Ansprüche, dadurch gekennzeichnet, daß beide Spannelemente (26, 34) formschlüssig mit dem Antriebszapfen (10) verbunden sind.

## Claims

1. Means for fixing a circular saw blade (22) to a drive pin (10), comprising two ring-like or disc-like clamping elements (26, 34) mounted on the drive pin (10) on both sides of the saw blade (22) and frictionally retaining the saw blade (22) between them, one of the clamping elements (26) being supported on a fixed shoulder (18) on the drive pin (10) and the other clamping element (34) being supported directly or through a thrust washer (12) by the head (20) of a bolt (14) which is screwed into a threaded bore (16) in the end of the drive pin (10), characterised in that, the saw blade (22) and at least one of the two clamping elements (26, 34) have structural means (24) through which, during a false mounting of the saw blade (22) on the drive pin (10), the supporting surface (36) of the other clamping element (34) facing the head (20) of the bolt (14) is so spaced from the shoulder (18) on the drive pin (10) that the said clamping element (34) can no longer be pushed on to the drive pin (10) or the bolt (14) no longer engages in the threaded bore (16) in the end of the drive pin (10).

2. Means according to claim 1, characterised in that, the saw blade (22, 40) is provided with at least one axial projection (24, 42) which engages in an annular recess (28) or around the outer periphery of one of the clamping elements (26 or 46) and which, on falsely mounting the saw blade, maintains the parts axially from one another to such an extent that the clamping element (34, 48) facing the bolt (14) can no longer be pushed onto the drive pin (10) or the bolt (14) no longer engages in the threaded bore (16) in the end of the drive pin.

3. Means according to claim 2, characterised in that, the saw blade (22) has a collar (24) in the form of a projection at its mounting opening and which engages in an extended bore section (28) is one of the clamping elements (26 or 34).

4. Means according to claim 2, characterised in that, the saw blade (40) has an axially extending tongue (42) which engages over the periphery of one of the clamping elements (46) and that the other clamping element (48) has an annular cross-sectional shape the external radius of which is greater than the distance (m) of the tongue (42) from the rotary axis of the drive pin (10).

5. Means according to claim 2, characterised in that, the axial projection or a recess associated with the saw blade is formed on a ring (50, 70) which is guided on the drive pin between the two clamping elements non-positively in a sense of rotation and is connected to the saw blade for rotation therewith by coupling elements (54, 56 or 76, 78) which at the same time prevent a false mounting of the saw blade on the ring.

6. Means according to claim 5, characterised in that, the coupling elements are formed by at least two pins (54, 56) projecting axially from the ring (50) and engaging in bores in the saw blade and which lie in different radial planes passing through the rotary axis of the drive pin and are at different distances (p, q) from the rotary axis.

7. Means according to claim 5, characterised in that, the saw blade (74) rests on an axial collar (72) on the ring (70) and that the coupling elements are formed by an asymmetrical shaping of the collar periphery and of the bore in the saw blade deviating from the circular shape with respect to any desired radial plane passing through the rotary axis.

8. Means according to one of the preceding claims, characterised in that, a false mounting of the saw blade together with the two clamping elements is made impossible by shaping the two clamping elements (26, 34 or 46, 48) differently.

9. Means according to claim 8, characterised in that, one clamping element (26) has a collar (30) axially overlapping the fixed shoulder (18) on the drive pin (10) and the inner diameter (e) of which is less than the external diameter (h) of a thrust washer (12) lying beneath the head (20) of the bolt (14) and the axial length of which is so calculated that, on a false mounting of the saw blade (22) together with the two clamping elements (26, 34) the bolt (14) no longer engages in the threaded bore (16) in the end of the drive pin.

10. Means according to claim 8, characterised in that, the seating provided on the drive pin (10) for the clamping element (46) engaging its shoulder (18) is so formed that the other clamping element (48) cannot be mounted on the said seating.

11. Means according to one of the preceding claims, characterised in that, both clamping elements (26, 34) are positively connected to the drive pin (10).

## Revendications

1. Dispositif de fixation pour une lame de scie circulaire (22) sur un tourillon d'entraînement (10), avec deux éléments de serrage (26, 34) annulaires ou en forme de disques montés des deux côtés de la lame de scie (22) sur un tourillon d'entraînement (10) et maintenant entre eux la lame de scie (22) par liaison par frottement, parmi lesquels l'un (26) s'appuie sur un épaulement fixe (18) du tourillon d'entraînement (10) et l'autre (34) s'appuie directement ou par l'intermédiaire d'une rondelle de pression (12) sur la tête (10) d'une vis (14) qui est vissée dans un perçage taraudé (16) pratiqué dans l'extrémité frontale du tourillon d'entraînement, caractérisé en ce que la lame de scie (22) et au moins l'un des deux éléments de serrage (26, 34) comportant des moyens constructifs (24) par lesquels, lors de l'engagement erroné de la lame de scie (22) sur le tourillon d'entraînement (10), la face d'appui (36) de l'autre élément de serrage (34) dirigé vers la tête (20) de la vis (14) se trouve à une distance de l'épaulement (18) du tourillon d'entraînement (10) telle que cet élément de serrage (34) ne peut plus être engagé sur le tourillon d'entraînement (10), ou que la vis (14) ne s'engage plus dans le perçage taraudé (16) de l'extrémité frontale du tourillon d'entraînement (10).

2. Dispositif selon la revendication 1, caractérisé en ce que la lame de scie (22, 40) est munie d'au moins une saillie axiale (24, 42), s'engageant dans un renfoncement (28) en forme de rainure annulaire ou sur la surface périphérique de l'un des éléments de serrage (26, 34) et qui, lors de l'engagement erroné de la lame de scie, maintient les éléments écartés en direction axiale dans une mesure telle que l'élément de serrage (34, 48) dirigé vers la vis (14) ne peut plus être engagé sur le tourillon d'entraînement (10) ou que la vis (14) ne s'engage plus dans le perçage taraudé (16) de la face frontale du tourillon d'entraînement.

3. Dispositif selon la revendication 2, caractérisé en ce que la lame de scie (22) comporte en tant que saillie axiale un collet (24) sur l'ouverture d'engagement, collet qui s'engage dans une partie de perçage élargie (28) de l'un des éléments de serrage (26 ou 34).

4. Dispositif selon la revendication 2, caractérisé en ce que la lame de scie (40) comporte une languette (42) en saillie axiale s'engageant sur le pourtour de l'un des éléments de serrage (46), et en ce que l'autre élément de serrage (48) a un profil de section en forme d'anneau circulaire, dont le rayon extérieur est supérieur à la distance (m) de la languette (42) à l'axe de rotation du tourillon d'entraînement (10).

5. Dispositif selon la revendication 2, caractérisé en ce que la saillie axiale associée à la lame de scie (22; 40) ou un renfoncement sont formés dans un anneau (50, 70) qui est guidé sans blocage dans le sens de rotation entre les deux éléments de serrage sur le tourillon d'entraînement (10) et qui est assemblé solidairement en rotation avec la lame de scie par des éléments d'accouplement (54, 56 ou 76, 78), qui empêchent en même temps un engagement erroné de la lame de scie sur l'anneau.

6. Dispositif selon la revendication 5, caractérisé en ce que les éléments d'accouplement sont constitués par au moins deux chevilles (54, 56) en saillie axiale sur l'anneau (50) et s'engageant dans des perçages de la lame de scie (22, 40), ces chevilles qui sont situées dans deux plans radiaux différents passant par l'axe de rotation du tourillon d'entraînement (10) et qui sont à des distances différentes (p, q) de l'axe de rotation.

7. Dispositif selon la revendication 5, caractérisé en ce que la lame de scie (74) est montée sur un collet axial (72) de l'anneau (70) et que les éléments d'accouplement sont constitués en donnant au pourtour du collet et au perçage de la lame de scie (74) une forme s'écartant de la forme circulaire, dissymétrique par rapport à tout plan radial passant par l'axe de rotation.

8. Dispositif selon l'une des revendications précédentes, caractérisé en ce que, par une forme différente des deux éléments de serrage (26, 34 ou 46, 48), l'engagement erroné de la lame de scie (22) avec les deux éléments de serrage est rendu impossible.

9. Dispositif selon la revendication 8, caractérisé en ce que l'un (26) des éléments de serrage comporte un collet (30) s'engageant en direction axiale sur l'épaulement fixe (18) du tourillon d'entraînement (10), le diamètre intérieur (e) de ce collet étant inférieur au diamètre extérieur (h) d'une rondelle de pression (12) se trouvant sous la tête (20) de la vis (14), la longueur axiale de ce collet étant déterminée de manière que lors de l'engagement erroné de la lame de scie (22) avec les deux éléments de serrage (26, 34), la vis (14) ne s'engage plus dans le perçage taraudé (16) de l'extrémité frontale du tourillon d'entraînement.

10. Dispositif selon la revendication 8, caractérisé en ce que le siège constitué sur le tourillon d'entraînement (10) pour l'élément de serrage (46) s'appliquant sur son épaulement (18) est formé de façon telle que l'autre élément de serrage (48) ne puisse pas s'engager sur ce siège.

11. Dispositif selon l'une des revendications précédentes, caractérisé en ce que les deux éléments de serrage (26, 34) sont reliés d'une façon sûre avec le tourillon d'entraînement (10).

# FIG.1

# FIG. 2

FIG. 3

FIG. 4

FIG. 5

FIG. 6